# EUROPÄISCHE PATENTSCHRIFT

(11) **EP 4 296 648 B1**
(45) Veröffentlichungstag und Bekanntmachung des Hinweises auf die Patenterteilung: **05.08.2026**
(21) Anmeldenummer: 22180505.4
(22) Anmeldetag: 22.06.2022
(51) Int. Cl.: G01N 17/00, E02D 31/02, E02D 33/00

(54) **VERSUCHSAUFBAU UND VERFAHREN ZUR SIMULATION REALER EINBAUBEDINGUNGEN VON ERDBERÜHRTEN UND/ODER SPRITZWASSERBELASTETEN GEBÄUDEBAUTEILEN**
EXPERIMENTAL SET-UP AND METHOD FOR SIMULATING REAL INSTALLATION CONDITIONS OF BUILDING COMPONENTS AFFECTED BY SOIL AND / OR SPRAYED WATER
MONTAGE D'ESSAI ET PROCÉDÉ DE SIMULATION DES CONDITIONS RÉELLES DE MONTAGE DES COMPOSANTS DE BÂTIMENT EN CONTACT AVEC LE SOL ET/OU CHARGÉS PAR DE L'EAU PROJETÉE

(43) Veröffentlichungstag der Anmeldung: 27.12.2023
(73) Patentinhaber: BASF SE, 67056 Ludwigshafen am Rhein (DE)
(72) Erfinder: von Auenmueller, Juergen, 67056 Ludwigshafen am Rhein (DE); Kaiser, Eduard, 67056 Ludwigshafen am Rhein (DE); Treml, Sebastian, 82166 Gräfelfing (DE); Sprengard, Christoph, 82166 Gräfelfing (DE)
(74) Vertreter: BASF IP Association

(56) Entgegenhaltungen:
- EP-A1- 4 296 647
- TOPCU DURMUS ET AL: "Durability of External Wall Insulation Systems with Extruded Polystyrene Insulation Boards", 11TH INTERNATIONAL CONFERENCE ON DURABILITY OF BUILDING MATERIALS AND COMPONENTS ISTANBUL TURKEY MAY, 14 May 2008 (2008-05-14), pages 11 - 14, XP055980799, Retrieved from the Internet <URL:https://www.irbnet.de/daten/iconda/CIB13220.pdf> [retrieved on 20221114]
- CAI SHANSHAN ET AL: "Moisture behavior of polystyrene insulation in below-grade application", ENERGY, ELSEVIER, AMSTERDAM, NL, vol. 159, 29 October 2017 (2017-10-29), pages 24 - 38, XP085312521, ISSN: 0378-7788, DOI: 10.1016/J.ENBUILD.2017.10.067
- KAPLAR CHESTER W: "MOISTURE AND FREEZE-THAW EFFECTS ON RIGID THERMAL INSULATIONS", April 1974 (1974-04-01), pages 1 - 37, XP055980792, Retrieved from the Internet <URL:https://erdc-library.erdc.dren.mil/jspui/bitstream/11681/5611/1/CRREL-Technical-Report-249.pdf> [retrieved on 20221114]
- LI YOUYUN ET AL: "Thermal Conductivity Characteristics of Thermal Insulation Materials Immersed in Water for Cold-Region Tunnels", ADVANCES IN MATERIALS SCIENCE AND ENGINEERING, vol. 2020, 9 April 2020 (2020-04-09), US, pages 1 - 15, XP055978514, ISSN: 1687-8434, DOI: 10.1155/2020/9345615
- ASPHAUG SILJE ET AL: "Monitoring outward drying of externally insulated basement walls: A laboratory experiment", BUILDING AND ENVIRONMENT, vol. 217, 18 April 2022 (2022-04-18), GB, pages 109097, XP055980559, ISSN: 0360-1323, DOI: 10.1016/j.buildenv.2022.109097

## Beschreibung

### Beschreibung

Die vorliegende Erfindung bezieht sich auf einen Versuchsaufbai mit einer Vorrichtung und ein Verfahren zur Simulation realer Einbaubedingungen von erdberührten und/oder spritzwasserbelasteten Gebäudebauteilen für die Untersuchung der Einflüsse auf Dämmstoffe durch die umweltbedingten Belastungen, wie diese im drückenden und lang anstauenden Sickerwasser auftreten können.

Es besteht ein Problem darin, dass für Dämmstoffe in der Anwendung im drückenden Grundwasser Nachweise erbracht werden müssen, wie sich Dämmstoffe unter dem Einfluss realer Umweltbedingungen mit der Zeit ändern. Diese Nachweise erfolgen bisher dadurch, dass an realen Gebäudeobjekten nach einer festgelegten Anwendungsdauer von mindestens drei Jahren Dämmstoffplatten entnommen und deren Eigenschaften im Vergleich zu den Eigenschaften vor dem Einbau untersucht werden.

Bei dieser Vorgehensweise wird aufgrund des Bodengutachtens von Belastungen der Platten durch drückendes und lang anhaltendes Grundwasser ausgegangen. Diese Bedingungen werden jedoch in der Folgezeit weder garantiert noch dokumentiert. Bereits das Auffinden von Objekten, in denen die geforderte Belastung mit einem andauernden Wasserdruck von 3,5 m Eintauchtiefe mutmaßlich auftreten, stellt eine bedeutende Hürde dar.

Aufgrund der Änderungen der Dämmstoffeigenschaften nach dieser Einbauzeit wird pauschal auf die Änderungen in jeglicher Einbausituation geschlossen. Wenn während der Einbauzeit deutlich weniger Wasser als erwartet an dem Gebäude ansteht, wird sich der Dämmstoff weniger stark verändern, als wenn andauernd Wasser bis zur erlaubten Eintauchtiefe ansteht. Eine Vergleichbarkeit von Werten verschiedener Bauprodukte, welche an verschiedenen Objekten entnommen werden, ist daher nicht gegeben. Eine Korrelation von Umweltbedingungen mit den sich potenziell ergebenden Änderungen der Eigenschaften der Platten kann mangels Dokumentation der auftretenden Belastung nicht erstellt werden.

Am Ende der Versuchsdauer werden Platten von dem Objekt entnommen, indem der Keller des Objektes wieder teilweise freigelegt wird. Eine Entnahme von Proben ist dort nur vereinzelt möglich. Zudem können die Platten bei der Entnahme erheblich beschädigt werden. Eine Erstellung von Messreihen ist ebenfalls nicht möglich.

Zur Schaffung realer, geeigneter, nachvollziehbarer, dokumentierbarer und in einem weiten Bereich beliebig einstellbarer Umweltbedingungen besteht der Bedarf an einem Versuchsaufbau, bei dem die erforderlichen Bedingungen eingestellt und zuverlässig aufrechterhalten werden können. Die Entnahme der Platten aus diesem Versuchsaufbau soll sowohl während der Versuchsdauer als auch an dessen Ende problemlos jederzeit möglich sein. Ebenso sollen Messreihen mit einer Reihe von Parametern realisiert werden können.

Der Artikel von Topcu Durmus et al.: "Durability of External Wall Insulation Systems with Extruded Polystyrene Insulation Boards",11th International Conference on Durability of Building Materials and Components Istanbul Turkey May, 14. Mai 2008 (2008-05-14), Seiten 11-14, XP055980799 offenbart eine Bewitterungseinrichtung zur Untersuchung von Dämmmaterial.

Der vorliegenden Erfindung liegt daher die Aufgabe zugrunde, einen neuartigen Versuchsaufbau zur Simulation realer Einbaubedingungen von erdberührten und/oder spritzwasserbelasteten Gebäudebauteilen bereitzustellen und ein entsprechendes Verfahren anzugeben.

Diese Aufgabe wird in einem ersten Aspekt der vorliegenden Erfindung durch einen Versuchsaufbau nach Anspruch 1 gelöst.

Mit "Gebäudebauteilen" werden tragende Teile eines Gebäudes bezeichnet, insbesondere Außenwände, Sockel und Kellerwände.

Unter "erdberührt" wird im Sinne der vorliegenden Erfindung der Perimeterbereich verstanden, das heißt die mit Erde in Berührung stehende Bauteilfläche bis zur Oberkante des Erdreichs. Als Erdreich wird dabei nicht nur Erde im klassischen Sinne verstanden, sondern das umgebende Substrat aus Erde, Sand, Schotter und dergleichen sowie Mischungen und Schüttungen davon.

Der Begriff "spritzwasserbelastet" bezeichnet das Gebäudebauteil ab der Oberkante des Erdreichs, das heißt der Sockelbereich einer Fassade. Der Sockelbereich schließt dabei auch spritzwasserbelastete Teile von Balkonen, Loggien, Flachdächern, Terrassen und dergleichen ein.

Der "wasserdichte Gebäudebaustoff" ist erfindungsgemäß Beton.

Das erfindungsgemäße Schachtelement (11) besteht aus mindestens vier Wandteilen und wird bevorzugt senkrecht eingesetzt, wozu an dem ersten Ende (11e), bevorzugt das untere Ende, die Grundplatte (13) vorgesehen ist. Das Schachtelement (11) ist auf die Grundplatte (13) dichtend aufgesetzt.

Die vorliegende Erfindung weist die Vorteile auf, dass das Schachtelement (11) eine reale Einbausimulation simulieren kann, indem es aus einem üblichen Gebäudebaustoff, erfindungsgemäß Beton, gefertigt wird. Damit kann bereits beim eingesetzten Material sowie auch bei den Wandstärken und sonstigen Dimensionen ein Standard festgelegt werden, um für die beabsichtigten Simulationen gleiche Voraussetzungen zu schaffen. Die tatsächlichen Dimensionen werden nachstehend noch näher ausgeführt, bewegen sich aber in einem Bereich, in dem die erfindungsgemäße Vorrichtung (1) praktisch noch gut handhabbar ist. Die erfindungsgemäße Vorrichtung (1) kann grundsätzlich an einem beliebigen Platz aufgestellt werden, um die beabsichtigten Simulationen durchzuführen.

In einer speziellen Weiterbildung der erfindungsgemäßen Vorrichtung ist das Schachtelement (11) mit drei Wandteilen (11a, 11b, 11c, 11d) rinnenförmig ausgestaltet, während der vierte Wandteil als eine Verschlussplatte (15) ausgebildet ist. Mit dieser ist das rinnenförmig ausgestaltete Schachtelement (11) an seiner offenen Seite wasserdicht verschließbar.

Durch die rinnenförmige Ausgestaltung ist, insbesondere bei längeren Schachtelementen (11), die gute Zugänglichkeit zu dem einen Wandteil gewährleistet, der eine ebene Gebäudewand simulieren soll. Der als Verschlussplatte (15) ausgebildete vierte Wandteil hat ebenfalls eine Dimension, in der er zum Verschließen gut handhabbar ist.

Eine erste, nicht erfindungsgemäße Ausführungsform sieht vor, dass das Schachtelement (11) eine Höhe zwischen 1 m und 10 m, bevorzugt zwischen 2 m und 8 m, insbesondere zwischen 3 m und 5 m, aufweist, wenn das Schachtelement (11) an seinem zweiten Ende (11f) offen bleibt. Die insbesondere bevorzugte Höhe zwischen 3 m und 5 m entspricht den gängigen Einbautiefen von erdberührten und/oder spritzwasserbelasteten und/oder durch drückendes Wasser und aufstauendes Sickerwasser belasteten Gebäudebauteilen, so dass für die Simulation keine umfangreichen technischen Voraussetzungen geschaffen werden müssen.

Die erfindungsgemäße Vorrichtung (1) umfasst ferner eine Deckelplatte (17), die das Schachtelement (11) an seinem zweiten Ende (111) wasserdicht abschließt. Das zweite Ende (11f) entspricht bevorzugt dem oberen Ende des Schachtelements (11). Diese Weiterbildung kann sicherstellen, dass im Inneren des Schachtelements (11) konstantere Bedingungen herrschen, zum Beispiel keine Austrocknung stattfindet oder durch Regen zusätzliche Feuchtigkeit eingebracht wird. Zudem verwandelt die Deckelplatte (17) die erfindungsgemäße Vorrichtung (1) in eine Druckkammer.

Diese Weiterbildung kann erfindungsgemäß dahingehend ergänzt werden, dass die Vorrichtung ferner einen Flüssigkeitsbehälter (19) umfasst, der mit dem Inneren der Vorrichtung (1) in fluiddynamischer Verbindung steht. Hierdurch kann einerseits je nach Bedarf Flüssigkeit, insbesondere Wasser, in das Innere geleitet werden, um einen bestimmten Feuchtegrad aufrecht zu erhalten.

Der Flüssigkeitsbehälter (19) kann einerseits beispielsweise direkt auf die Deckelplatte (17) aufgesetzt sein. Andererseits kann der Flüssigkeitsbehälter (19) über eine Fluidleitung (starr oder flexibel) mit der die Deckelplatte (17) verbunden sein.

Eine zu der ersten Ausführungsform alternative, erfindungsgemäße zweite Ausführungsform der erfindungsgemäßen Vorrichtung (1) sieht vor, dass das Schachtelement (11) eine Höhe zwischen 0,5 m und 5 m, bevorzugt 1 m bis 3 m, aufweist, wenn das Schachtelement (11) an seinem zweiten Ende (11fe) mit der Deckelplatte (17) verschlossen ist. Hierdurch kann ein hydrostatischer Druck in der erfindungsgemäßen Vorrichtung (1) aufgebaut werden, um beispielsweise die beabsichtigten Simulationen variieren zu können. Durch einen erhöhten hydrostatischen Druck können beispielsweise in der bevorzugt nur 1 m bis 3 m hohen Vorrichtung (1) Bedingungen eingestellt werden, welche einer Vorrichtung (1) gemäß der ersten Ausführungsform mit insbesondere bevorzugt 3 m bis 5 m entsprechen. Darüber hinaus können bestimmte Simulationen zeitlich gerafft werden, um einen auf längere Dauer ausgelegten Versuch in kürzerer Zeit durchführen zu können.

Der Versuchsaufbau (100) zur Simulation realer Einbaubedingungen von erdberührten und/oder spritzwasserbelasteten und/oder durch drückendes Wasser und aufstauendes Sickerwasser belasteten Gebäudebauteilen umfasst
- zumindest eine Vorrichtung (1), wie sie vorstehend beschrieben wurde,
- eine Dämmstoffschicht (3), die auf zumindest eines der vier Wandteile (11a, 11b, 11c, 11d) der zumindest einen Vorrichtung (1) über die gesamte Fläche aufgebracht ist,
- einen Freiraum (111) zwischen der Dämmstoffschicht (3) und dem gegenüberliegenden Wandteil (11a, 11b, 11c, 11d) oder der Verschlussplatte (15),
wobei der Freiraum (111) zumindest teilweise mit Wasser oder mit einer von Wasser umgebenen Substratschüttung (5) gefüllt ist.

Die Dämmstoffschicht (3) umfasst erfindungsgemäß das Dämmstoffmaterial, das der Simulation, bzw. der Untersuchung unterzogen werden soll. Zur Simulation der realen Einbaubedingung wird die Dämmstoffschicht (3) auf eines der vier Wandteile (11a, 11b, 11c, 11d) über die gesamte Fläche dieses Wandteils (11a, 11b, 11c, 11d) aufgebracht. Die Dämmstoffschicht (3) wird insbesondere in der Vertikalen aufgebracht. Das Aufbringen geschieht in der Regel durch Verkleben, kann sich aber nach der Zielrichtung der Simulation bzw. Untersuchung richten. So könnte beispielsweise auch der Einfluss einer unsachgemäßen Verklebung auf die Dämmstoffschicht (3) untersucht werden.

Der Freiraum (111) dient dazu, das Wasser und/oder die Substratschüttung (5) aufzunehmen, welche die realen Bedingungen simulieren sollen, beispielsweise drückendes und lang anhaltendes Grundwasser.

Mit "Substratschüttung" wird eine für die Simulation verwendete Schüttung bezeichnet, welche neben Erde im klassischen Sinne auch Sand, Schotter und dergleichen sowie Mischungen und Schüttungen davon enthalten kann.

Der erfindungsgemäße Versuchsaufbau (100) weist zunächst grundsätzlich die gleichen Vorteile auf wie die in ihm verbaute Vorrichtung (1). Darüber hinaus ermöglicht der erfindungsgemäße Versuchsaufbau (100) die Simulation des realen Einbaus unter definierten Bedingungen, so dass unterschiedliche Dämmstoffe unter gleichen Voraussetzungen untersucht werden können. Durch die als Schachtelement (11) ausgebildete Vorrichtung (1) können zudem verschiedene Einbauszenarien simuliert werden, neben drückendem und lang anhaltendem Grundwasser auch deutlich trockenere Umstände oder schwankende Grundwasserstände.

Der erfindungsgemäße Versuchsaufbau (100) umfasst ferner zumindest eine Einrichtung zur Zufuhr von Wasser zu der Substratschüttung (5). Auf diese Weise kann beispielsweise ein gleichbleibender Wassergehalt sichergestellt werden.

Darüber hinaus ist der erfindungsgemäße Versuchsaufbau (100) dahingehend ausgebildet, dass durch Aufsetzen der Deckelplatte (17) der Vorrichtung (1) und Verschließen der Versuchsaufbau (100) als Druckkammer aufgeführt ist. Wie vorstehend schon erwähnt, können damit beispielsweise in kürzerer Zeit Vorgänge simuliert werden, die unter Realbedingungen länger andauern würden.

Da neben dem Wassergehalt in der Substratschüttung (5) auch die herrschenden Temperaturen für eine Simulation von Interesse sein können, hat es sich als vorteilhaft herausgestellt, dass der erfindungsgemäße Versuchsaufbau (100) ferner umfasst
- eine erste Temperiereinheit, welche zumindest mit der von Wasser umgebenen Substratschüttung (5) in Wirkverbindung steht,
   und optional
- eine zweite Temperiereinheit, welche zumindest mit dem Wandteil (11a, 11b, 11c, 11d), auf den die Dämmstoffschicht (3) aufgebracht ist, in Wirkverbindung steht.

Mit der ersten Temperiereinheit kann das Wasser und/oder die Wasser enthaltende Substratschüttung (5) temperiert werden, sowohl gekühlt wie auch erwärmt. Auf diese Weise kann zum Beispiel eine jahreszeitliche Änderung der Bodentemperatur simuliert werden.

Die zweite Temperiereinheit hingegen steht mit dem Teil der erfindungsgemäßen Vorrichtung (1) in Wirkverbindung, welche eine Kellerwand simuliert. Bei Nutzung eines realen Kellerraums eines Gebäudes, beispielsweise als Wohn- oder Hobbyraum, können durch das Heizen des Kellerraums deutliche Temperaturgradienten zwischen dem Gebäudeinneren und dem umgebenden Erdreich auftreten. Diese lassen sich mit der zweiten Temperiereinheit simulieren.

Mehrere der erfindungsgemäßen Versuchsaufbauten (100) können in einer speziellen Ausführungsform nebeneinander angeordnet einen Raum umschließen, der einen Boden (7) und eine Decke (9) aufweist. Auf diese Weise kann noch realer ein Kellerraum simuliert werden.

Wenn in der Beschreibung der erfindungsgemäßen Vorrichtung (1) und/oder des erfindungsgemäßen Versuchsaufbaus (100) Verfahrensmerkmale genannt werden, so beziehen sich diese insbesondere auf das erfindungsgemäße Verfahren. Ebenso beziehen sich gegenständliche Merkmale, die in der Beschreibung des erfindungsgemäßen Verfahrens angeführt werden, auf die erfindungsgemäße Vorrichtung (1) und/oder das erfindungsgemäßen Versuchsaufbaus (100).

Die vorstehend genannte Aufgabe wird ferner durch ein Verfahren zur Simulation realer Einbaubedingungen von erdberührten und/oder spritzwasserbelasteten und/oder durch drückendes Wasser und aufstauendes Sickerwasser belasteten Gebäudebauteilen gelöst, umfassend die Schritte
a) Bereitstellen zumindest eines Schachtelements (11) einer Vorrichtung (1), wie sie vorstehend beschrieben wurde,
b) Aufbringen einer Dämmstoffschicht (3) auf zumindest eines der vier Wandteile (11a, 11b, 11c, 11d) der zumindest einen Vorrichtung (1), und
c) Einbringen von Wasser oder einer von Wasser umgebenen Substratschüttung (5) in den Freiraum (111) zwischen der Dämmstoffschicht (3) und dem gegenüberliegenden Wandteil (11a, 11b, 11c, 11d) oder der Verschlussplatte (15),
   wodurch ein Versuchsaufbau (100) erhalten wird, wie er vorstehend beschrieben wurde,
d) Begutachten des Zustandes der Dämmstoffschicht (3) in zeitlichen Intervallen.

Das erfindungsgemäße Verfahren weist grundsätzlich die gleichen Vorteile auf, wie sie vorstehend für die Vorrichtung (1) und den erfindungsgemäßen Versuchsaufbau (100) bereits angegeben wurden. Mit dem erfindungsgemäßen Verfahren ist es möglich, in reproduzierbarer Weise eine Dämmstoffschicht (3) unter Simulation realer Einbaubedingungen zu untersuchen. Dabei können die Parameter innerhalb einer Simulation oder zwischen verschiedenen Simulationen definiert eingestellt werden.

Das erfindungsgemäße Verfahren umfasst ferner einen Schritt c1) Aufsetzen der Deckelplatte (17) der Vorrichtung (1) und Verschließen des Versuchsaufbaus (100), wodurch eine Druckkammer erhalten wird. Dieser Schritt berücksichtigt die vorstehend beschriebene Ausführungsform der erfindungsgemäßen Vorrichtung (1), bei welcher durch einen erhöhten hydrostatischen Druck beispielsweise in bestimmte Simulationen zeitlich gerafft werden können, um einen auf längere Dauer ausgelegten Versuch in kürzerer Zeit durchführen zu können.

Mit der Deckelplatte (17) kann ferner ein Flüssigkeitsbehälter (19) verbunden und mit dem Inneren der Vorrichtung (1) in fluiddynamische Verbindung gesetzt werden. Wie vorstehend schon erwähnt, können damit beispielsweise in kürzerer Zeit Vorgänge simuliert werden, die unter Realbedingungen länger andauern würden.

Erfindungsgemäß ist weiter vorgesehen, dass nach Schritt c) zumindest die Substratschüttung (5) temperiert wird. Hierdurch können in vorteilhafter Weise die herrschenden Temperaturen für eine Simulation einzubeziehen.

Schließlich kann das erfindungsgemäße Verfahren so weitergebildet sein, dass bei einem Versuchsaufbau (100), wie er vorstehend beschrieben wurde, sowohl zumindest der Wandteil (11a, 11b, 11c, 11d), auf den die Dämmstoffschicht (3) aufgebracht ist, als auch die Substratschüttung (5) temperiert werden, um ein reales Diffusionsgefälle reproduzierbar zu definieren.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren.

Es zeigen:
- Fig. 1: eine schematische Darstellung einer rinnenförmig ausgestalteten Vorrichtung 1 nach einer speziellen Ausführungsform der Erfindung,
- Fig. 2: eine schematische Explosionsdarstellung eines Versuchsaufbaus 100 nach speziellen Ausführungsform der Erfindung,
- Fig. 3: eine schematische Draufsicht auf den in Figur 2 dargestellten Versuchsaufbau 100 in geschlossener Form,
- Fig. 4: eine schematische Darstellung eines Versuchsaufbaus 100 in einer speziellen Ausführungsform der Erfindung als Druckkammer und
- Fig. 5: eine schematische Darstellung einer Anordnung von Versuchsaufbauten 100 nach einer Ausführungsform der Erfindung.

In den Figuren werden gleiche Teile mit den gleichen Bezugszeichen versehen. Jedoch werden aus Gründen der Übersichtlichkeit nicht alle Bezugszeichen in allen Figuren angegeben.

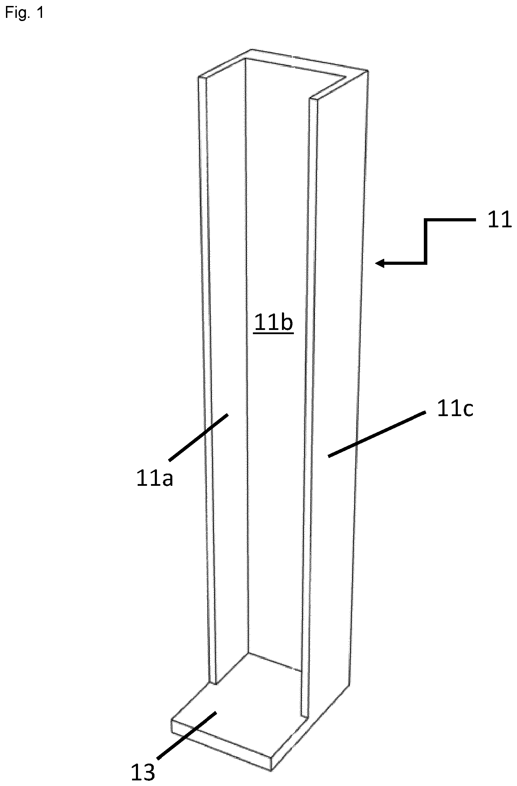

Figur 1 zeigt als schematische Darstellung ein rinnenförmig ausgestaltetes Schachtelement 11 einer Vorrichtung 1, das auf einer Grundplatte 13 steht. Diese Darstellung der offenen, leeren Vorrichtung macht deutlich, dass auf die Rückwand, den Wandteil 11b, in sehr einfacher Weise eine Dämmstoffschicht 3 aufgebracht werden kann, da diese Rückwand gut zugänglich ist.

In den baurechtlichen Vorschriften wird eine vollflächige Verklebung der Dämmstoffschicht 3 gefordert. Inwieweit bei den handelsüblichen Dämmstoffplatten und dem Anbringen mit einem Kleber, der gewöhnlich mit einem Zahnspachtel aufgebracht wird, in der Praxis tatsächlich eine Vollflächigkeit erhalten wird, ist unsicher. Neuere Vorschriften fordern mittlerweile, dass der Kleber lediglich vollflächig auf der Wand und der Dämmplatte aufzubringen ist (was die Voraussetzung dafür ist, eine vollflächige Verklebung zu erreichen). Einer der möglichen Versuche, der mit diesem Aufbau durchgeführt werden soll, kann genau diese Frage beantworten, ob eine vollflächige Verklebung tatsächlich notwendig ist oder nicht. Alternative Anbringungsmöglichkeiten können in der Folge ebenfalls untersucht werden.

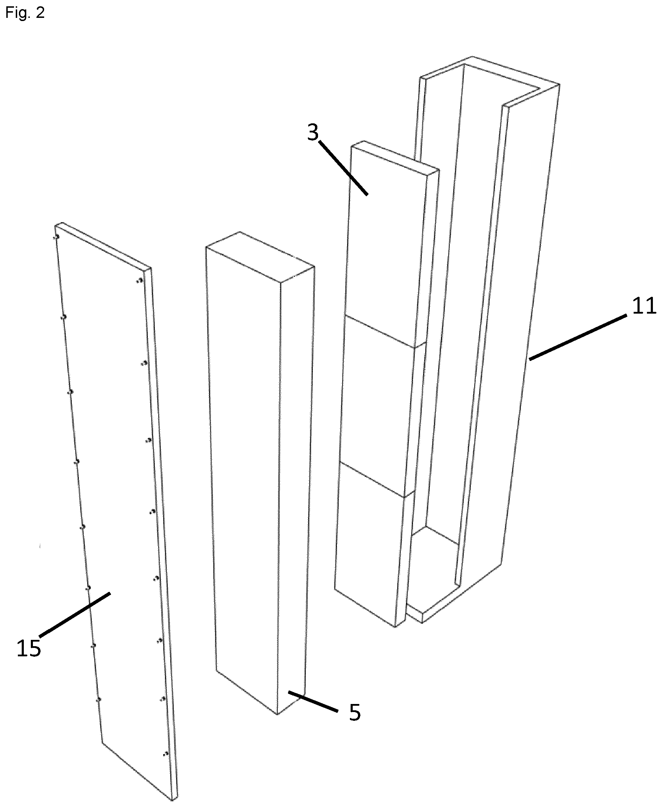

Figur 2 zeigt als Explosionsdarstellung schematisch einen Versuchsaufbau 100, in der zunächst wieder das rinnenförmig ausgestaltete Schachtelement 11 auf der Grundplatte 13 gezeigt wird. An dem rückwärtigen Wandteil 11b kann auf der gesamten Fläche die Dämmstoffschicht 3 aufgebracht werden, bevor der in dieser Ausführungsform als Verschlussplatte 15 ausgeführte Wandteil an dem rinnenförmig ausgestalteten Schachtelement 11 angebracht wird. In den Freiraum 111 wird dann die Substratschüttung 5 eingebracht.

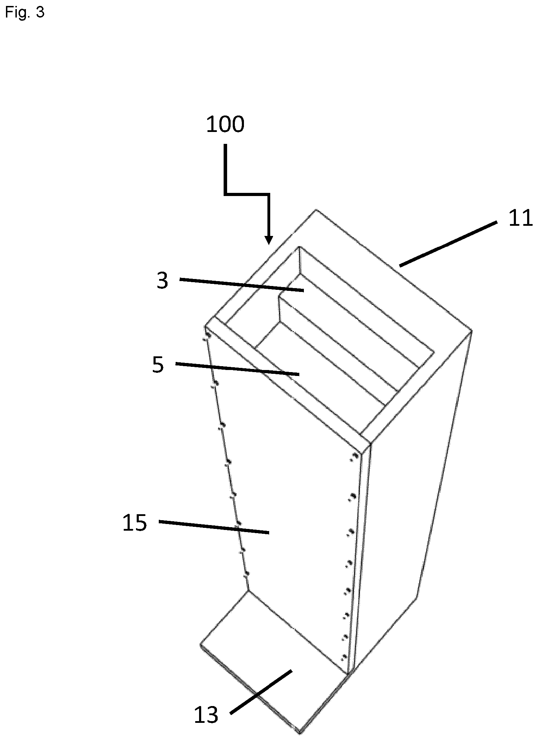

In Figur 3 zeigt die Ausführungsform der Figur 2 in zusammengesetztem, geschlossenem Zustand. Es wird bildlich deutlich, dass die Dämmstoffschicht 3 rückwärtig voll an dem einen Wandteil 11b anliegt, während auf der Vorderseite die Substratschüttung 5 eingebracht ist.

Für den Fall, dass nicht die gesamte Einbauhöhe von bevorzugt 3 m bis 5 m für eine Simulation benötigt wird, kann es ausreichend sein, ein kürzeres Schachtelement 11 zu verwenden, das einem oben offenen Würfel gleicht. Bei einer geringeren Höhe von 1 m bis 3 m ist die Handhabbarkeit gegeben, insbesondere die problemlose Anbringung der Dämmstoffschicht 3 an einem der Wandteile 11a, 11b, 11c, 11d. Für einfache Versuche und gegebenenfalls nur einmalige Verwendung würden daher solche sehr einfachen Ausführungsformen ausreichen.

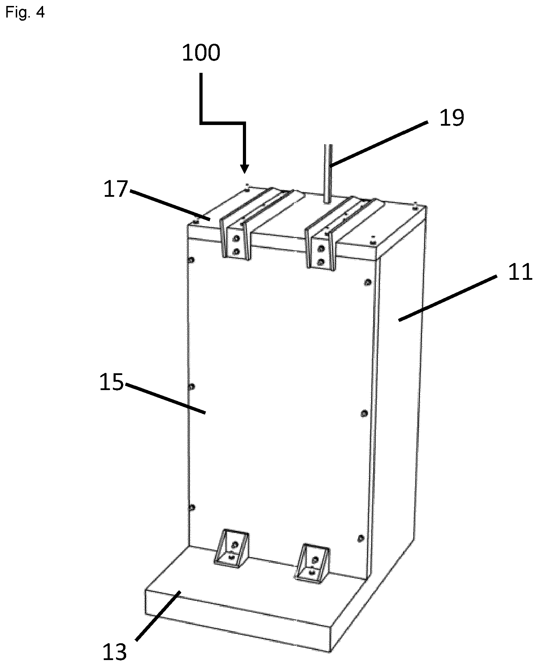

Der Versuchsaufbau 100 wird in einer speziellen Ausführungsform der Erfindung als Druckkammer in Figur 4 schematisch dargestellt. Die Deckelplatte 17 schließt das Schachtelement 11 nach oben ab, wobei in dieser Darstellung noch Befestigungsmittel vorgesehen sind, welche die Deckelplatte 17 an dem Schachtelement 11 halten. Auf der Deckelplatte 17 ist die Verbindung zum Flüssigkeitsbehälter 19 angeordnet.

Der erfindungsgemäße Versuchsaufbau 100 mit angeschlossenem Flüssigkeitsbehälter 19 bietet die Möglichkeit, feuchte Substratschüttungen 5 zu simulieren. Hier können in der Substratschüttung 5 Feuchtesensoren vorgesehen sein, die bei Unterschreiten einer bestimmten Substratfeuchte eine Bewässerung bewirken.

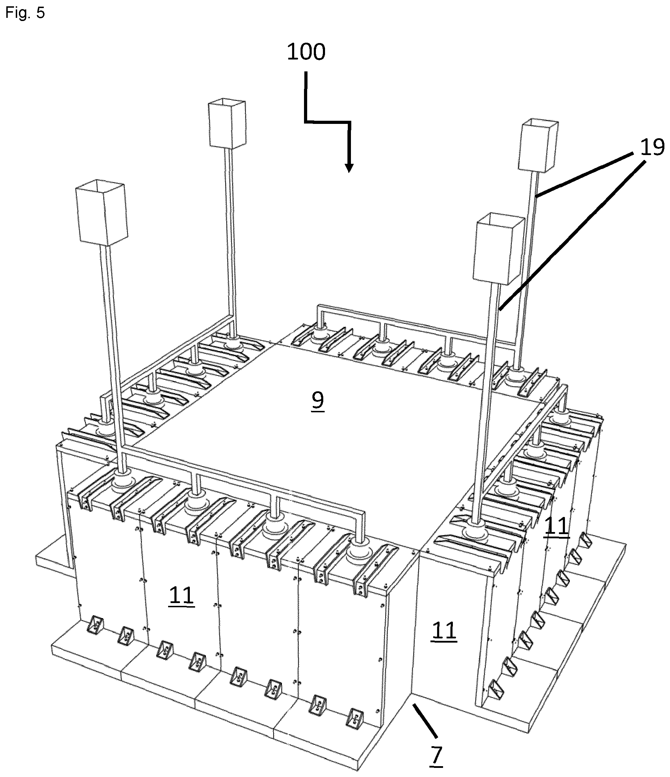

Eine ganz spezielle Ausführungsform sieht vor, dass eine Anzahl von erfindungsgemäßen Versuchsaufbauten 100 nebeneinander angeordnet einen Raum umschließen, wie schematisch in Figur 5 dargestellt wird. Rein beispielhaft wird hier ein Quadrat gebildet, das einen Kellerraum simuliert. Die einzelnen erfindungsgemäßen Vorrichtungen 1 sind als Druckbehälter ausgeführt, wobei die Deckelplatten 17 jeweils mit Verbindungsleitungen untereinander und mit mindestens einem Flüssigkeitsbehälter 19 in fluiddynamischer Verbindung stehen. Der umschlossene Raum wird von einem Boden 7 und eine Decke 9 vollständig gebildet.

Nachstehend wird beispielhaft ein Versuch beschrieben.

Der Versuch wird an einem Ausschnitt aus einer Kellerwand in Form eines Schachtelements **11** durchgeführt. Dieses Schachtelement **11** kann eine Höhe von 4 m haben, so dass eine Eintauchtiefe von typischerweise bei 3,5 m nachgestellt werden kann. Das Schachtelement 11 kann aus zwei oder mehr Teilen bestehen, um den Versuchsauf- oder -abbau zu erleichtern. In diesem Schachtelement 11 werden Dämmstoffplatten zur einer Dämmstoffschicht möglichst vollflächig mit dem einen Wandteil 11b verklebt und das Schachtelement 11 (in Form der Vorrichtung 1) mit Erdreich als Substratschüttung 5 verfüllt. Um eine reale Erdlast zu simulieren, muss als Substratschüttung 5 Erdreich verwendet werden, welches in seinen Eigenschaften wie Körnigkeit und Wasserdurchlässigkeit (weitere Eigenschaften sind definierbar) dem von realem Erdreich entspricht. Anschließend wird das Schachtelement 11 (in Form der Vorrichtung 1) mit Wasser geflutet, so dass eine reale Einbausituation erreicht wird. Die Druckbelastung wird durch die aufgebrachte Wassersäule simuliert, die mittels des Flüssigkeitsbehälters 19 erzeugt wird. Die beispielhafte Eintauchtiefe von 3,5 m ist demnach für eine beliebige Belastungszeit, beliebig andauernd und dokumentiert gegeben.

Weiterhin kann das Schachtelement 11 (in Form der Vorrichtung 1) auch allseitig verschlossen werden, wodurch der Versuchsaufbau 100 eine Druckkammer darstellt. Durch das Aufsetzen einer Wassersäule auf diese Druckkammer können damit Wasserdrücke von deutlich mehr als der Höhe des Schachtelements 11 simuliert werden. Die Druckkammer bietet damit auch die Möglichkeit, die Vorrichtung 1 anstatt 4 m hoch auch lediglich in der Höhe von beispielsweise einer Dämmstoffplattenlänge von typischerweise 1,25 m zu erstellen. Die Einbausituation von 3,5 m Wassertiefe wird dann mit der aufgesetzten Wassersäule an nur einer Platte simuliert.

In der Vorrichtung 1, bzw. dem Versuchsaufbau 100, können jegliche Einbausituationen mit Stoßfugen, Kreuzfugen, vollflächiger Verklebung oder anderer Einbauten simuliert werden. Durch die Verwendung mehrerer Versuchsaufbauten 100 können eine Reihe von unterschiedlichen Bedingungen (Wasserhöhen) simuliert werden. Damit lassen sich Testreihen durchführen. Durch entsprechende Anordnung der Versuchsaufbauten 100 kann ein geschlossener Raum geschaffen werden. Der Wandteil des Versuchsaufbaus 100, an dem die Dämmstoffschicht 3 befestigt ist, kann wie ein Kellerraum temperiert werden.

Das in die Versuchsaufbauten 100 geleitete Wasser kann ebenfalls auf die im Erdreich vorherrschende Temperatur gebracht werden. Mittels dieser Temperaturregelungen des "Innenraumes" als auch des Wassers wird ein reales Diffusionsgefälle definiert und reproduzierbar dargestellt. Die Entnahme der Proben zu einem beliebigen Zeitpunkt erfolgt, indem das Wasser aus dem Versuchsaufbau 100 abgelassen und das Erdreich entfernt wird. Der Versuchsaufbau 100 kann für eine nächste Versuchsperiode weiterverwendet werden.

### Bezugszeichen

- 1: Vorrichtung
- 3: Dämmstoffschicht
- 5: Substratschüttung
- 7: Boden
- 9: Decke
- 11: Schachtelement
- 11a, 11b, 11c, 11d: Wandteilen
- 11e: erstes Ende
- 11f: zweites Ende
- 13: Grundplatte
- 15: Verschlussplatte
- 17: Deckelplatte
- 19: Flüssigkeitsbehälter
- 100: Versuchsaufbau
- 111: Freiraum

## Patentansprüche

1. Versuchsaufbau (100) zur Simulation realer Einbaubedingungen von erdberührten und/oder spritzwasserbelasteten und/oder durch drückendes Wasser und aufstauendes Sickerwasser belasteten Gebäudebauteilen, umfassend.
- zumindest eine Vorrichtung (1) zur Simulation realer Einbaubedingungen von erdberührten und/oder spritzwasserbelasteten und/oder durch drückendes Wasser und aufstauendes Sickerwasser belasteten Gebäudebauteilen, umfassend
- ein Schachtelement (11) mit mindestens vier Wandteilen (11a, 11b, 11c, 11d), das aus einem wasserdichten Gebäudebaustoff hergestellt ist, und
- eine Grundplatte (13), die das Schachtelement (11) an seinem ersten Ende (11e) wasserdicht abschließt,
wobei zumindest einer der vier Wandteile (11a, 11b, 11c, 11d) dazu ausgelegt ist, eine ebene Gebäudewand zu simulieren,
wobei der wasserdichte Gebäudebaustoff Beton ist und wobei die Vorrichtung (1) ferner eine Deckelplatte (17) umfasst, die das Schachtelement (11) an seinem zweiten Ende (11f) wasserdicht abschließt,
- eine Dämmstoffschicht (3), die auf zumindest eines der vier Wandteile (11a, 11b, 11c, 11d) der zumindest einen Vorrichtung (1) über die gesamte Fläche aufgebracht ist,
- einen Freiraum (111) zwischen der Dämmstoffschicht (3) und dem gegenüberliegenden Wandteil (11a, 11b, 11c, 11d) oder der Verschlussplatte (15),
wobei der Freiraum (111) zumindest teilweise mit Wasser oder mit einer von Wasser umgebenen Substratschüttung (5) gefüllt ist,
wobei durch Aufsetzen der Deckelplatte (17) der Vorrichtung (1) und Verschließen der Versuchsaufbau (100) als Druckkammer aufgeführt ist,
wobei der Versuchsaufbau (100) ferner zumindest eine Einrichtung zur Zufuhr von Wasser zu der Substratschüttung (5), und eine erste Temperiereinheit umfasst, welche zumindest mit dem Wasser im Freiraum oder mit der von Wasser umgebenen Substratschüttung (5) in Wirkverbindung steht.

2. Versuchsaufbau (100) nach Anspruch 1, ferner umfassend
- eine zweite Temperiereinheit, welche zumindest mit dem Wandteil (11a, 11b, 11c, 11d), auf den die Dämmstoffschicht (3) aufgebracht ist, in Wirkverbindung steht.

3. Versuchsaufbau (100) nach einem der Ansprüche 1 oder 2, wobei das Schachtelement (11) mit drei Wandteilen (11a, 11b, 11c) rinnenförmig ausgestaltet ist und das vierte Wandteil (11d) als eine Verschlussplatte (15) ausgebildet ist, mit welcher das rinnenförmige Schachtelement (11) an seiner offenen Seite wasserdicht verschließbar ist.

4. Versuchsaufbau (100) nach Anspruch 1, wobei die Vorrichtung (1) ferner einen Flüssigkeitsbehälter (19) umfasst, der mit dem Inneren der Vorrichtung (1) in fluiddynamischer Verbindung steht.

5. Versuchsaufbau (100) nach Anspruch 1 oder 4, wobei das Schachtelement (11) eine Höhe zwischen 0,5 m und 5 m, bevorzugt 1 m bis 3 m, aufweist, wenn das Schachtelement (11) an seinem zweiten Ende (11fe) mit der Deckelplatte (17) verschlossen ist.

6. Verfahren zur Simulation realer Einbaubedingungen von erdberührten und/oder spritzwasserbelasteten und/oder durch drückendes Wasser und aufstauendes Sickerwasser belasteten Gebäudebauteilen, **gekennzeichnet durch** die Schritte
a) Bereitstellen zumindest einer Vorrichtung (1) nach einem der Ansprüche 1 bis 5,
b) Aufbringen einer Dämmstoffschicht (3) auf zumindest eines der vier Wandteile (11a, 11b, 11c, 11d) der zumindest einen Vorrichtung (1), und
c) Einbringen von Wasser oder einer von Wasser umgebenen Substratschüttung (5) in den Freiraum (111) zwischen der Dämmstoffschicht (3) und dem gegenüberliegenden Wandteil (11a, 11b, 11c, 11d) oder der Verschlussplatte (15),
wodurch ein Versuchsaufbau (100) nach Anspruch 1 erhalten wird,
d) Begutachten des Zustandes der Dämmstoffschicht (3) in zeitlichen Intervallen,
ferner umfassend einen Schritt c1) Aufsetzen der Deckelplatte (17) der Vorrichtung (1) und Verschließen des Versuchsaufbaus (100), wodurch eine Druckkammer erhalten wird,
wobei nach Schritt c) zumindest die Substratschüttung (5) temperiert wird.

7. Verfahren nach Anspruch 6, wobei mit der Deckelplatte (17) ein Flüssigkeitsbehälter (19) verbunden wird und mit dem Inneren der Vorrichtung (1) in fluiddynamische Verbindung gesetzt wird.

8. Verfahren nach einem der Ansprüche 6 oder 7, wobei bei einem Versuchsaufbau (100) nach Anspruch 1 sowohl zumindest der Wandteil (11a, 11b, 11c, 11d), auf den die Dämmstoffschicht (3) aufgebracht ist, als auch die Substratschüttung (5) temperiert werden, um ein reales Diffusionsgefälle reproduzierbar zu definieren.

## Claims

1. An experimental set-up (100) for the simulation of real installation conditions of building components in contact with soil and/or exposed to splash water and/or subjected to pressing water and accumulating seepage water, comprising.
- at least one device (1) for the simulation of real installation conditions of building components in contact with the soil and/or exposed to splash water and/or subjected to pressing water and accumulating seepage water, comprising
- a shaft element (11) with at least four wall parts (11a, 11b, 11c, 11d), which is made of a watertight building material, and
- a base plate (13), which seals the shaft element (11) in a watertight manner at its first end (11e),
wherein at least one of the four wall parts (11a, 11b, 11c, 11d) is designed to simulate a flat building wall,
wherein the watertight building material is concrete and wherein the device (1) further comprises a cover plate (17), which seals the shaft element (11) at its second end (11f) in a watertight manner,
- an insulating layer (3), which is applied over the entire surface to at least one of the four wall parts (11a, 11b, 11c, 11d) of the at least one device (1),
- a free space (111) between the insulation layer (3) and the opposite wall part (11a, 11b, 11c, 11d) or the closure plate (15),
wherein the free space (111) is at least partially filled with water or with a substrate filling (5) surrounded by water,
wherein, by placing the cover plate (17) of the device (1) and closing it, the experimental set-up (100) is configured as a pressure chamber,
wherein the experimental set-up (100) further comprises at least one device for the supply of water to the substrate filling (5), and a first temperature-control unit, which is operatively connected at least with the water in the free space or with the substrate filling surrounded by water.

2. The experimental set-up (100) according to claim 1, further comprising
- a second temperature-control unit, which is operatively connected with at least the wall part (11a, 11b, 11c, 11d), whereto the insulation layer (3) is applied.

3. The experimental set-up (100) according to any one of claims 1 or 2, wherein the shaft element (11) is formed in a trough-shaped manner with three wall parts (11a, 11b, 11c) and the fourth wall part (11d) is designed as a closure plate (15), by means of which the trough-shaped shaft element (11) is sealable in a watertight manner on its open side.

4. The experimental set-up (100) according to claim 1, wherein the device (1) further comprises a liquid container (19), which is in fluid-dynamic connection with the interior of the device (1).

5. The experimental set-up (100) according to claim 1 or 4, wherein the shaft element (11) has a height between 0.5 m and 5 m, preferably 1 m to 3 m, when the shaft element (11) is closed at its second end (11fe) with the cover plate (17).

6. A process for the simulation of real installation conditions of building components in contact with soil and/or exposed to splash water and/or subjected to pressing water and accumulating seepage water, **characterized by** the steps of
a) providing at least one device (1) according to any one of claims 1 to 5,
b) applying an insulation layer (3) to at least one of the four wall parts (11a, 11b, 11c, 11d) of the at least one device (1), and
c) introducing water or a substrate filling (5) surrounded by water into the free space (111) between the insulation layer (3) and the opposite wall part (11a, 11b, 11c, 11d) or the closure plate (15),
whereby an experimental set-up (100) according to claim 1 is obtained,
d) assessing the condition of the insulation layer (3) at time intervals,
further comprising a step c1) of placing the cover plate (17) of the device (1) and closing the experimental set-up (100), whereby a pressure chamber is obtained,
wherein after step c) at least the substrate filling (5) is tempered.

7. The process according to claim 6, wherein a liquid container (19) is connected to the cover plate (17) and is placed in fluid-dynamic connection with the interior of the device (1).

8. The process according to any one of claims 6 or 7, wherein in an experimental set-up (100) according to claim 1, both at least the wall part (11a, 11b, 11c, 11d), whereto the insulation layer (3) is applied, and the substrate filling (5) are tempered in order to reproducibly define a real diffusion gradient.

## Revendications

1. Dispositif expérimental (100) pour la simulation de conditions réelles d'installation des composants du bâtiment en contact avec le sol et/ou exposés aux éclaboussures d'eau et/ou soumis à la pression de l'eau et aux eaux de percolation accumulées, comprenant
- au moins un dispositif (1) pour la simulation de conditions réelles d'installation des composants du bâtiment en contact avec le sol et/ou exposés aux éclaboussures d'eau et/ou soumis à la pression de l'eau et aux eaux de percolation accumulées, comprenant
- un élément de puits (11) comportant au moins quatre parties de paroi (11a, 11b, 11c, 11d), lequel est realisé en un matériau de construction étanche à l'eau, et
- une plaque de base (13) qui ferme l'élément de puits (11) de manière étanche à l'eau à sa première extrémité (11e),
dans lequel au moins l'une des quatre parties de paroi (11a, 11b, 11c, 11d) est conçue pour simuler une paroi plane de bâtiment,
dans lequel le matériau de construction étanche à l'eau est du béton et dans lequel le dispositif (1) comprend en outre une plaque de couverture (17) qui ferme de manière étanche à l'eau l'élément de puits (11) à sa seconde extrémité (11f),
- une couche isolante (3) appliquée sur toute la surface d'au moins l'une des quatre parties de paroi (11a, 11b, 11c, 11d) du au moins un dispositif (1),
- un espace libre (111) entre la couche isolante (3) et la partie de paroi opposée (11a, 11b, 11c, 11d) ou la plaque de fermeture (15),
dans lequel l'espace libre (111) est au moins partiellement rempli d'eau ou d'un remplissage de substrat (5) entouré d'eau,
dans lequel, par la mise en place de la plaque de couverture (17) du dispositif (1) et la fermeture, le dispositif expérimental (100) est configuré comme une chambre de pression,
dans lequel le dispositif expérimental (100) comprend en outre au moins un dispositif d'alimentation en eau du remplissage de substrat (5) et une première unité de régulation de température, laquelle est en liaison fonctionnelle au moins avec l'eau présente dans l'espace libre ou avec le remplissage de substrat entouré d'eau.

2. Dispositif expérimental (100) selon la revendication 1, comprenant en outre
- une seconde unité de régulation de température, laquelle est en liaison fonctionnelle au moins avec la partie de paroi (11a, 11b, 11c, 11d), sur laquelle la couche isolante (3) est appliquée.

3. Dispositif expérimental (100) selon l'une quelconque des revendications 1 ou 2, dans lequel l'élément de puits (11) est formé de manière en auge avec au moins trois parties de paroi (11a, 11b, 11c), et dans lequel la quatrième partie de paroi (11d) est conçue comme une plaque de fermeture (15), au moyen de laquelle l'élément de puits (11) en forme d'auge peut être fermé de manière étanche à l'eau sur son côté ouvert.

4. Dispositif expérimental (100) selon la revendication 1, dans lequel le dispositif (1) comprend en outre un récipient de liquide (19), lequel est en connexion fluidodynamique avec l'intérieur du dispositif (1).

5. Dispositif expérimental (100) selon la revendication 1 ou 4, dans lequel l'élément de puits (11) présente une hauteur comprise entre 0,5 m et 5 m, de préférence entre 1 m et 3 m, lorsque l'élément de puits (11) est fermé à sa seconde extrémité (11f) au moyen de la plaque de couverture (17).

6. Procédé de simulation de conditions réelles d'installation des composants du bâtiment en contact avec le sol et/ou exposés aux éclaboussures d'eau et/ou soumis à la pression de l'eau et aux eaux de percolation accumulées, **caractérisé par** les étapes
a) fournir au moins un dispositif (1) selon l'une quelconque des revendications 1 à 5,
b) appliquer une couche isolante (3) sur au moins l'une des quatre parties de paroi (11a, 11b, 11c, 11d) du au moins un dispositif (1), et
c) introduire de l'eau ou un remplissage de substrat (5) entouré d'eau dans l'espace libre (111) entre la couche isolante (3) et la partie de paroi opposée (11a, 11b, 11c, 11d) ou la plaque de fermeture (15),
de manière à obtenir un dispositif expérimental (100) selon la revendication 1,
d) évaluer l'état de la couche isolante (3) à des intervalles de temps,
le procédé comprenant en outre une étape c1): mettre en place la plaque de couverture (17) du dispositif (1) et fermer le dispositif expérimental (100), de manière à obtenir une chambre de pression,
dans lequel, après l'étape c), au moins le remplissage de substrat (5) est tempéré.

7. Procédé selon la revendication 6, dans lequel un récipient de liquide (19) est relié à la plaque de couverture (17) et est mis en connexion fluidodynamique avec l'intérieur du dispositif (1).

8. Procédé selon l'une des revendications 6 ou 7, dans lequel, dans un dispositif expérimental (100) selon la revendication 1, et au moins la partie de paroi (11a, 11b, 11c, 11d), sur laquelle la couche isolante (3) est appliquée, et le remplissage de substrat (5) sont tempérés afin de définir de manière reproductible un gradient de diffusion réel.
